# EUROPEAN PATENT SPECIFICATION

(11) **EP 0 331 401 B1**
(45) Date of publication and mention of the grant of the patent: **17.08.1994**
(21) Application number: 89301938.0
(22) Date of filing: 27.02.1989
(51) Int. Cl.: F03B 3/10, F03B 13/00

(54) **Energy recovery pump device**
Pump-Einrichtung mit Energierückgewinnung
Pompe-dispositif à récupération d'énergie

(30) Priority: 26.02.1988 US 160679
(43) Date of publication of application: 06.09.1989
(73) Proprietor: Oklejas, Robert, Monroe, MI 48161 (US); Oklejas, Eli, jr., Monroe, MI 48161 (US)
(72) Inventor: Oklejas, Robert, Monroe, MI 48161 (US); Oklejas, Eli, jr., Monroe, MI 48161 (US)
(74) Representative: Greene-Kelly, James Patrick

(56) References cited:
- DE-A- 3 510 160
- US-A- 2 652 228
- US-A- 4 410 429

## Description

### Background of the Invention

The invention relates to a new and useful energy recovery pump device to reduce the energy requirements of many industrial and liquid purification processes that involve pumping liquid or gases at high pressures.

This device is particularly well-suited for use in reverse osmosis processes which are used to remove salt from seawater.

In the reverse osmosis system and other systems in which the invention is particularly well-suited for use a liquid or gas is pumped at high pressure into a chamber. In the chamber a portion of the liquid or gas is purified or otherwise processed and drawn from the chamber. The remainder of the high pressure gas or liquid is discharged from the chamger as reject that is disposed. The reject is usually at a very high pressure and this pressure must be dissipated hitherto through the use of a throttling valve or other device. Usually the throttling valve reduces the pressure in the reject stream to essentially zero so that all of the pressure energy in the reject stream is dissipated and provides no further benefit to the process. These energy losses can be very significant and result in a basic inefficiency in the system. In the use of reverse osmosis methods to remove salt from seal rate these high energy costs associated with such an inefficient system have severely limited the commercial applications of the technology.

Several methods have been tried to recover the energy in the reject stream in order to reduce the operating costs of industrial or liquid purification processes. With regard to reverse osmosis systems, pistons with mechanically actuated valves that are positioned in devices resembling steam piston engines have been used. However, these devices have found no commercial acceptance due to the high cost and high maintenance required due to the mechanically complexed designs of the system. Furthermore, these systems produce strong shockwaves in the feed flow called water hammer, each time a valve opens or closes resulting in possible damage to components of the reverse osmosis system.

Other systems have used a turbine driven by the high pressure reject that is discharged from the system. The turbine is connected to the motor operating the feed pump. For good efficiency, a turbine must operate at very high speeds, usually exceeding 15,000 rpm. The high speed means that a reducing gear box must be installed between the turbine unit and the feed pump motor to effectively transfer the power from the turbine to the feed pump motor. The reducing gear box is a very expensive piece of equipment and requires a great deal of skill to install and maintain properly. A gear box also requires external means of lubrication further increasing the maintenance costs. It is also possible that the lubrication can contaminate the water that is feed to the reverse osmosis system. High speed seals must also be provided on the shaft between the turbine and the speed reducing gear box. These high speed seals are also expensive and usually not very reliable in field applications. For the above reasons there has been very little commercial acceptance of this type of power recovery system for use in reverse osmosis processes.

### Summary of the Invention

The invention is directed to an energy recovery pump device for use in industrial processes where a fluid is pumped at a high pressure into the process and at least a portion of the liquid is discharged from the process at a high pressure. Thus, a turbine is positioned to receive the high pressure discharge from the process. The turbine has an impeller positioned on a shaft and the discharged fluid engages the impeller and causes the impeller and shaft to rotate. A pump is positioned adjacent to the turbine to receive fluid being pumped to the process. The pump has an impeller mounted on a shfat and the shaft of the pump is operatively connected to the shaft of the turbine. Rotation of the turbine shaft causes the impeller and the shaft of the pump to rotate whereby the pump assists in supplying the fluid under pressure to the process and to recover energy from the high pressure fluid discharged from the process.

Also disclosed is a method for recovering energy from an industrial process, where a fluid is pumped at a high pressure into the process and at least a portion of the fluid is discharged from the process at a high pressure, using such a device.

It is an object of the invention to provide an energy recovery pump device having a turbine that is rotated by the high pressure discharge from an industrial process where the rotation of the turbine causes the impeller of a pump to rotate to assist in supplying liquid at a high pressure to the industrial process, and having a thrust balancing provision within the device.

The present invention consists in an energy recovery pump device for use in an industrial process where a fluid is pumped at a high pressure into the process and at least a portion of the fluid is discharged from the process at a high pressure, the device comprising:
a central body portion that defines a turbine impeller cavity and a pump impeller cavity;
a turbine inlet nozzle extending through said central body portion; said turbine inlet nozzle opening into the outer periphery of said turbine impeller cavity, and a turbine exhaust passageway leading away from adjacent the center of said turbine impeller cavity;
a turbine positioned in said turbine impeller cavity, said turbine comprising an impeller mounted on a shaft;
a pump positioned in said pump impeller cavity to receive said fluid to be pumped at high pressure into said process, said pump comprising an impeller also mounted on shaft whereby rotation of said turbine causes said pump impeller to rotate whereby said pump assists in supplying said received fluid under high pressure to said process, characterised in that a cap defines an end wall of said turbine cavity at a clearance with said impeller and in that an annular groove is formed in the said cap coaxially with the turbine shaft, said groove being in communication with ducting which ducting itself communicates with a region in the pump cavity of high fluid pressure whereby fluid can flow through said ducting and annular groove to balance the forces exerted on said pump impeller and said turbine impeller.

DE-05 3510160 is also concerned with a turbine-driven energy-recovery pump, but uses a complex internal hydrostatic/hydrodynamic thrust bearing at the centre of the device between the turbine and pump impellers to accommodate axial pressures at different loadings. Simplicity of access and structure, and direct feed of fluid to the regions requiring a maintained clearance are absent from this prior proposal.

The above and other objects of the invention will be more fully understood by reading the following detailed description of the invention in combination with the attached drawings.

### DESCRIPTION OF THE DRAWINGS

Fig.1 is a schematic view of a prior art system to purify a liquid.

Fig.2 is a schematic view of the energy power recovery pump device of the present invention used in a system.

Fig.3 is another form of a system as in Fig.2.

Fig.4 is another form of a system as shown in Fig.2.

Fig.5 is a partial cross-sectional view of the energy power recovery pump device.

Fig.6 is a cross-sectional view taken along line 6-6 of Fig.5.

Fig.7 is a cross-sectional view taken along line 7-7 in Fig.5.

Fig.8 is a cross-sectional view taken along line 8-8 in Fig.5.

Fig.9 is a cross-sectional view taken along line 9-9 in Fig.5.

Fig. 10 is a diagramn showing the use of the device of Fig.5.

Fig.11 is another diagram showing the use of the device of Fig.5.

### Description of the Preferred Embodiment

The invention is directed to a power recovery pump device that can be utilized to reduce the energy requirements of many industrial and liquid purification processes that involve pumping liquid or gases at high pressures. More particularly, the power recovery pump device recovers energy from the high pressure liquid or gas that is discharged from the purification process and uses this energy to pump the liquid or gas at high pressure into the purification process. The features of the invention will be more readily understood by referring to the attached drawings in connection with the following description.

The power recovery pump device of the present invention is particularly well-suited for use in a process to remove salt from sea water, called a reverse osmosis process. Accordingly, the invention will be described using the reverse osmosis process as the system where the power recovery pump device is utilized. It should be understood, however, that the power recovery pump device of the present invention can be used to reduce the energy requirements of many industrial and liquid purification processes that involve pumping liquid or gases at high pressures.

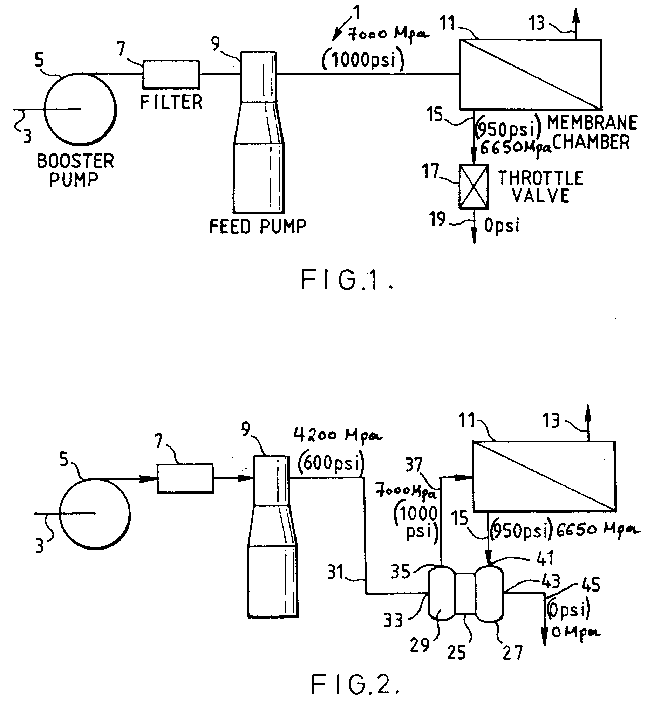

To better understand the environment in which the power recover pump device can be utilized, it is necessary to describe how a typical reverse osmosis system to remove salt from sea water operates. Fig.1 shows a typical reverse osmosis system 1 where saltwater passes through an inlet pipe 3 into a booster pump 5. The booster pump increases the pressure of the saltwater to about 1.75 MPa (about 25 pounds per square inch) and pumps the saltwater through a filter 7 where suspended impurities in the saltwater can be removed. From the filter 7 the saltwater passes into feed pump 9 where the pressure of the saltwater is increased to about 7000 MPa (about 1000 psi). The high pressure (7000 Mpa) (1000 psi) saltwater is then directed into a membrane chamber 11 where walt is removed from at least a portion of the sea water. As an example if (380 litres) (100 gallons) per minute of saltwater is supplied to the membrane chamber 11, approximately 95 litres (25 gallons) per minute of purified water will be produced by the membrane chamber. The purified water is discharged from the membrane chamber at a low pressure through the fresh water discharge line 13. Approximately 285 litres (75 gallons) per minutes of concentrated saltwater brine is discharged from the membrane chamber through the brine discharge line 15. The concentrated brine is discharged from the chamber at about 6650 MPa (950 psi) and this concentrated brine is called the reject. The high pressure reject pases through a throttle valve 17 where the pressure of the concentrated brine reject is reduced so that the reject can be discharged through a waste line 19 for disposal. The pressure of the reject discharged through the waste line 19 is essentially zero. The throttle valve 17 also acts to maintain pressure in the brine discharge line 15 to maintain the proper pressure in the membrane chamber to allow at least a portion of the saltwater to be purified.

In the example cited above for a reverse osmosis purification system the throttle valve lowers the pressure of the concentrated brine reject stream by approximately 6650 Mpa (950 psi). At a flow rate of 285 litres (75 gallons) per minute for the reject, the hydraulic power dissipated by the throttle valve is about 31KW (42 horsepower). This is a great deal of energy that must be put into system by the feed pump 9 and this energy is effectively lost from the system as the energy is dissipated by the throttle valve 17.

Fig.2 shows a reverse osmosis system where a power recovery pump device has been installed in the system. This system has essentially the same components as the previously described reverse osmosis system shown in Fig.1 with the exception that a power recovery pump device 25 is operatively connected between the feed pump 9 and the membrane chamber 11 and the power recovery pump device is operatively connected to the brine discharge line 15 from the membrane chamber 11. The power recovery pump device has a turbine end 27 and a pump end 29. The pipe 31 from the feed pump 9 is conencted to the pump inlet 33 on the pump end 29. The sea water passes through the pump inlet 33 through the pump end 29 and is discharged from the pump discharge 35. From the pump discharge 35 the sea water passes through pipe 37 into the membrane chamber 11. The portion of the sea water that is purified by the membrane chamber 11 passes from the chamber through discharge line 13. The concentrated brine reject passes from the membrane chamber 11 through brine discharge line 15. Brine discharge line 15 is operatively connected to the turbine inlet nozzle 41 on the turbine end 27 of the power recovery pump device 25. The concentrated reject passes through the turbine end 27 and is discharged from the turbine exhaust passage 43. From the turbine exhaust passage 43 the concentrated brine reject passes through waste line 45 and is disposed.

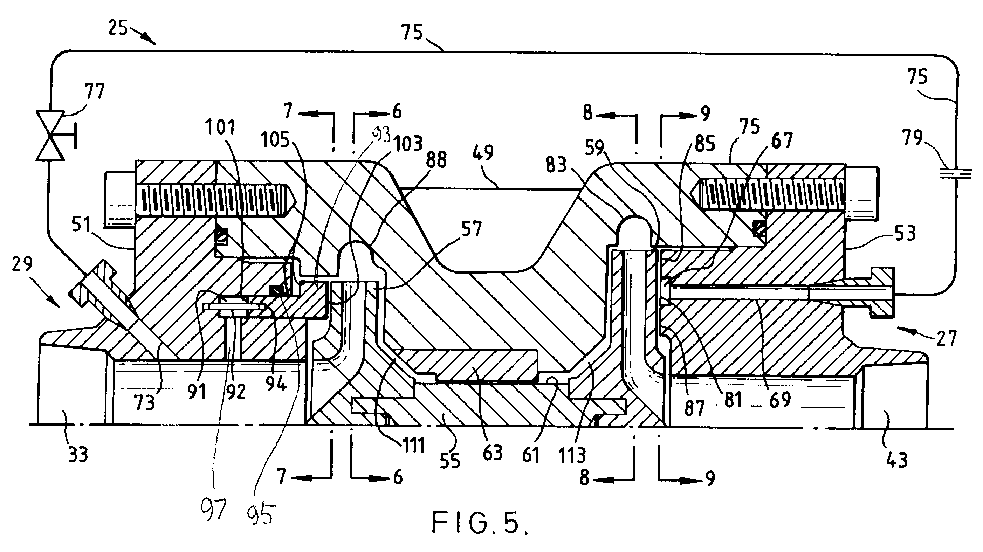

Figs 5-9 show the details of the power recovery pump device 25. The power recovery pump device unit has a center body 49, a pump end cap 51, and turbine end cap 53 and a rotor 55. The center body 49 and pump end cap 51 define pump impeller cavity 88 and the center body 49 and turbine end cap 53 define turbine impeller cavity 83. The rotor 55 consists of a pump impeller 57, turbine impeller 59 and a rotor shaft 61. The pump impeller 57 and the turbine impeller 59 are operatively connected to the rotor shaft 61. The pump impeller 57 is disposed to be located in the pump impeller cavity 88 and the turbine impeller 59 is disposed to be located in the turbine impeller cavity 83. The rotor shaft 61 is supported in the radial direction by a sleeve bearing 63. The rotor shaft 61 does not extend beyond the power recovery pump device thereby eliminating the need for external shaft seals.

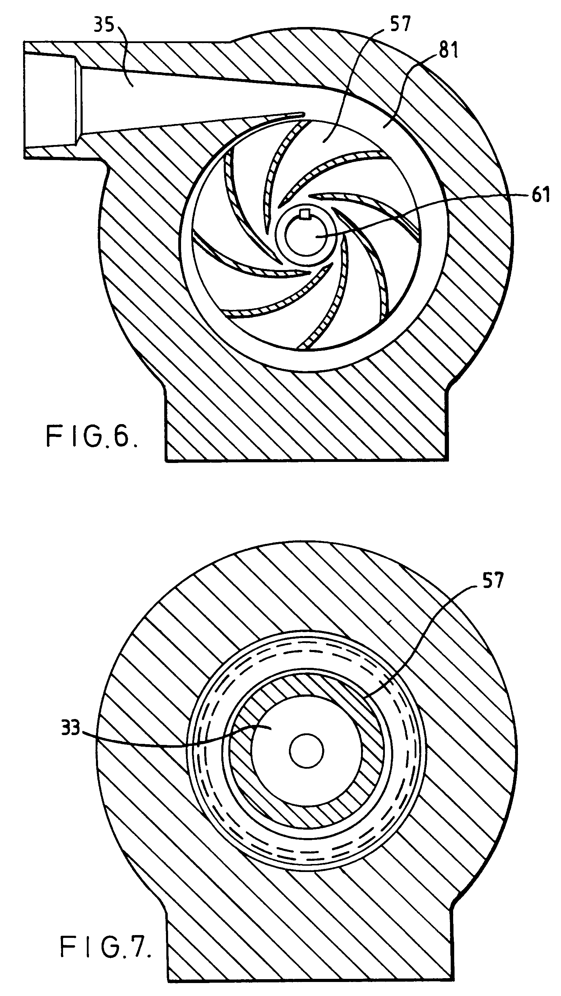

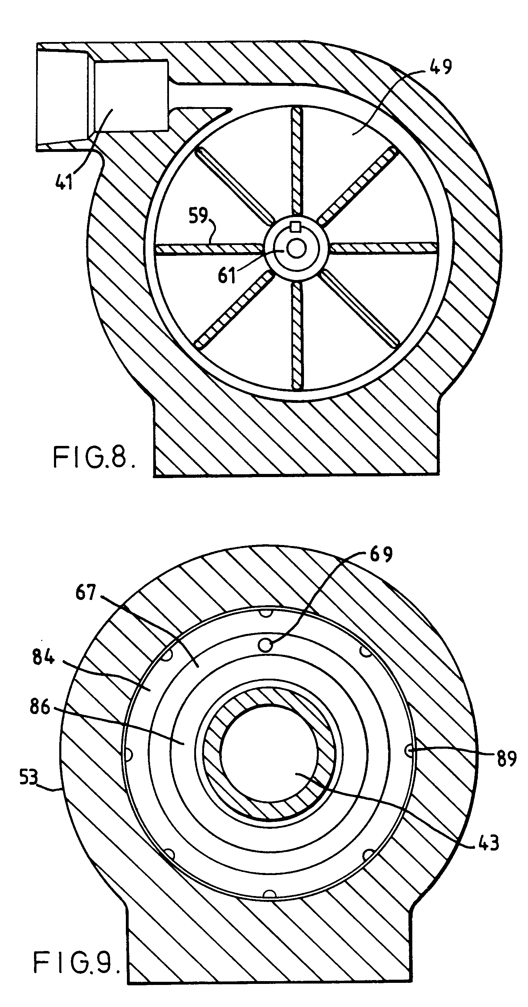

The inlet for the turbine end 27 of the power recovery pump device 25 is through turbine inlet nozzle 41 shown in Fig. 8. The turbine inlet nozzle 41 is connected to the brine discharge line 15 from the membrane chamber 11. The turbine exhaust passage 43 as shown in Figs 5 and 9 connects to waste discharge line 45. On the pump end 29 of the power recovery pump device 25 the pump inlet 33, shown in Figs. 5 and 7, is connected to feed pipe 31 from the feed pump 9. The pump discharge passage 35 is shown in Fig. 6 is connected to a pipe 37 that leads to the membrane chamber 11.

A groove 67 is located in the turbine end cap 53 and forms an annular ring in the turbine end cap. The groove is in communication with the turbine impeller cavity 83 where the turbine impeller 59 is located. A passageway 69 passes through the turbine end cap 53 and is in communication with the groove 67. A passageway 73 passes through the pump end cap 51 and is in communication with the pump inlet 33. A conduit 75 extends between and connects the passageway 69 in the turbine end cap 53 with the passageway 73 in the pump end cap 51. A valve 77 is positioned in the conduit 75 adjacent to the pump end cap 51. An orifice plate 79 is positioned in the conduit 75 adjacent to the turbine end cap 53. The orifice plate 79 has a plurality of orifices located therein to regulate the flow of fluid through the conduit 75. The orifice plate prevents quick changes in the rate of fluid flow through the conduit 75. An axial clearance 81 extends between the outer periphery of the turbine impeller 59 and the turbine end cap 53. The axial clearance has an outer axial clearance 85 that is located on the side of the groove 67 that is spaced apart from the rotor shaft 61 and an inner axial clearance 87 that is located on the side of the groove 67 that is adjacent to the rotor shaft 61. The groove 67 is in communication with the axial clearance 81. The cross-sectional area of the annular ring formed by the groove 67 is from about 1.5 to about 2.5 times the cross-sectional area of the rotor shaft 61. In practice it has been found that the groove 67 functions well if its cross-sectional are is about 2 times the cross-sectional area of the rotor shaft 61.

Shown in Fig. 9 there is an outer seal surface 84 and an inner seal surface 86 located in the turbine end cap 53. The outer and inner seal surfaces are positioned adjacent the outer axial clearance 85 and the inner axial clearance 87, respectively. Shallow grooves 89 extend radially from one side of the outer sealing surface 84 but not all the way across the outer sealing surface. The shallow grooves 89 form a hydrodynamic thrust bearing on the outer sealing surface. It should be understood that the shallow grooves could alternatively be positioned on the inner seal surface 86 to form a hydrodynamic thrust bearing. The portion of the outer sealing surface that contains the shallow grooves 89 produces fluid film hydrodynamic lift during rotation of the turbine impeller 59. The other portion of the outer sealing surface 84 provides a seal between the high pressure fluid in the groove 67 and the regions of lower pressure at the turbine exhaust passage 43 and the outer periphery of the turbine impeller 59. Once the turbine impeller 59 has achieved sufficient operating speed to generate hydrodynamic lift, the flow of fluid through the conduit 75 can be shut off by the valve 77. In this configuration the sealing surface contains both the hydrodynamic thrust bearing and a plain sealing area needed to reduce leakage between zones of different pressure.

The radial width of the inner seal surface 86 should be greater than the radial width of the outer seal surface 84 due to the higher pressure differential between the groove 67 and the turbine exhaust passage 43 than between the groove 67 and the turbine inlet 41. The inner and outer sealing surfaces may be separately attached to the turbine end cap 53 and can be made from the same or different material than the turbine impeller 59.

As shown in Fig. 5, on the pump end 29 of the power recovery pump device 25 there is a pump impeller cavity 88 and the pump impeller 57 is positioned in this cavity. In the pump end cap 51 there is a seal cavity 91. A wear ring 93 is slidably positioned in the seal cavity 91. The wear ring is positioned so that it extends part way into the seal cavity 91. O-rings 95 are positioned adjacent the portion of the wear ring 93 that extends into the seal cavity 91 to provide a seal around the wear ring 93. A portion of the wear ring 93 extends from the seal cavity 91 and extends towards the pump impeller 57. This portion of the wear ring 93 has an increased cross-sectional area that acts as a stop to limit the movement of the wear ring in the seal cavity 91 in a direction away from the pump impeller 57. A passageway 97 extends from the seal cavity 91 to the pump inlet passageway 33. The portion of the wear ring 93 that extends into the seal cavity 91 terminates in the face 101. The end of the wear ring 93 that extends from the seal cavity 91 terminates in a seal face 103 that is adjacent to the pump impeller 57. The area of face 101 is approximately .4 of the area of the seal face 103. The wear ring 93 also has a step face 105 that faces the pump end cap 51. The area of the step face 105 is approximately .6 of the area of the seal face 103. Seal face 103 is positioned so that it is substantially parallel to the side of the pump impeller 57. Face 101 and step face 105 are disposed so that they are substantially parallel to seal face 103. The wear ring 93 is positioned so that it is free to move axially in the seal cavity 91. A pin 92 extends from the pump end cap 51 into the seal cavity 91 and into a cavity 94 in the wear ring 93. The pin 92 prevents the wear ring 93 from rotating but does not prevent axial movement of the wear ring in the seal cavity 91.

Positioned between the pump impeller 57 and turbine impeller 59 is sleeve bearing 63. There is a chamber 111 that is positioned between the sleeve bearing 63 and the pump impeller 57. The chamber 111 is in communcation with the pump impeller cavity 88. On the opposite side of the sleeve bearing 63 there is an annular space 113 that connects to the turbine impeller cavity 83. The sleeve bearing 63 is disposed around the rotor shaft 61 so that there is small seal clearance 115 between the rotor shaft 61 and the sleeve bearing 63. The seal clearance 115 provides a path of communication between the chamber 111 and the annular space 113.

In operation of the power recovery pump device 25, saltwater from the feed pump 9 enters the pump inlet 33 passes through the pump end 29 of the power recovery pump turbine and is directed to the membrane chamber 11. The salt brine reject stream from the membrane chamber 11 passes through brine discharge line 15 into the turbine inlet nozzle 41. The brine passes through the turbine end 27 and is discharged through the turbine exhaust passage 43. The turbine inlet nozzle 41 converts the high pressure brine reject flow into a high velocity flow. The high velocity flow brine enters the turbine impeller cavity 83 and causes the turbine impeller 59 to rotate. As the turbine impeller 59 is mounted on rotor shaft 61 and the pump impeller 57 is also mounted on the rotor shaft 61 the rotation of the turbine impeller causes the pump impeller to rotate. The rotating pump impeller 57 draws saltwater from the feed pump into the pump inlet 33. The saltwater passes into the pump impeller cavity 88 and the rotating pump impeller 57 raises the pressure of the saltwater. The saltwater is then directed out through the pump discharge 35 and is directed to the membrane chamber 11. In this manner the energy in the high pressure discharge from the membrane chamber 11 can be utilized to assist in pumping saltwater into the membrane chamber. As an example, once the system is running the feed pump 9 can deliver saltwater at approximately 4200 MPa (600 psi) to the power recovery pump turbine 25. The 6650 MPa (950 psi) concentrated brine reject is utilized to rotate the turbine impeller 59 which rotates the pump impeller 57 so that the saltwater entering the pump inlet 33 can be boosted from 4200 MPa (600 psi) as it enters the pump inlet to 7000 MPa (1000 psi) as it is discharged from the pump discharge 35.

The use of the power recovery pump device greatly reduces the pressure increase in the saltwater required to be produced by the feed pump 9 and this significantly reduced the power requirements for the feed pump. Reducing the power requirement for the feed pump has a significant impact on the energy cost for operating the feed pump 9. At the same time the reduced feed pump discharge pressure reduces the stress on the pump and should extend the life of the feed pump. In addition, the concentrated saltwater brine that is discharged through the turbine exhaust passage 43 is at a very low or zero pressure so that the concentrated saltwater brine can be easily disposed of. This eliminates the need for a throttle valve to reduce the pressure of the concentrated saltwater brine that it discharged from the membrane chamber 11.

For the power recovery pump device to work effectively several significant problems must be overcome. At the pump inlet 33 the saltwater is delivered at a very high pressure about 4200 MPa (about 600 psi) from the feed pump 9. This high pressure generates a strong axial force on the components insider of the power recovery pump device. This high axial force must be accommodated through a simple reliable and low cost thrust bearing for the rotor shaft 61. This trust bearing must display low drag characteristics and cannot require lubrication as the lubricants could contaminate the water passing to the membrane chamber 11. The power recovery pump device must also be able to transfer a significant portion of the hydraulic energy available in the concentrated brine reject stream from the membrane chamber 11 to justify the cost of the power recovery pump device. Unfortunately, the combination of high pressure differentials and low flow rates found in most reverse osmosis system are conditions that are very unfavorable for good efficiency in turbo machinery. The only way to obtain good turbine efficiency is to have very high rotational speeds for the turbine impeller and this causes problems with the bearings for the rotor shaft. The power recovery pump device must also be able to operate for several years with little or no maintenance. Most reverse osmosis systems are used in applications where very little maintenance service is availabe. Thus the power recovery pump device component of the reverse osmosis system must require very little maintenance. In order to maintain good efficiency for the power recovery pump device it is necessary to have very close tolerances between the internal seals and these close tolerances must be maintained during the operation of the power recovery pump device. Due to the conditions in which reverse osmosis system operate it is inevitable that wear and corrosion will take place on the components of the power recovery pump device. Due to the conditions in which reverse osmosis system operate it is inevitable that wear and corrosion will take place on the components of the power recovery pump device. Accordingly, it is necessary to have an automatic system to adjust the seal clearances to accommodate the wear and corrosion in the power recovery pump device.

As set forth above, the pressure at the pump inlet 33 is approximately 4200 MPa (600 psi) and the pressure at the turbine exhaust passageway is essentially zero. This large pressure differential acts to push the rotor shaft 61 and the attached pump impeller 57 and turbine impeller 59 towards the turbine exhaust passage 43. The force acting on the rotor shaft 61 and the pump impeller 57 and the turbine impeller 59 can exceed 227 kg (500 pounds).

Conventional thrust bearings are not suited to handle the loads that can be placed upon the rotor shaft 61 of the power recovery pump device. Rolling contact thrust bearings such as ball or roller bearings must operate with proper lubrication such as oil or grease. Such bearings require two or more shaft seals that are able to separate the high pressure water from the bearing. The shaft seals would be very expensive, require high maitnenance and always create the possibility of contamination of the saltwater with lubricants. A water lubricated fluid film thrust bearing is another possibility. However, in order for a water lubricated fluid film thrust bearing to function, the shaft located in the bearing must revolve at very high rates of speed in order to establish the lubricating film of water between the rotating and stationary thrust surfaces. In a power recovery pump device the axial thrust can be present when the rotor is revolving very slowly or is completely stationary. For example, during the start-up of the system the feed pump will quickly develop its full pressure yet the rotor shaft and impellers in the power recovery pump device will not begin to rotate until the saltwater brine reject from the membrane chamber 11 is directed to the turbine inlet nozzle 41 to cause the turbine impeller 59 to rotate. The rotor shaft 61, turbine impeller 59 and pump impeller 57 will rotate slowly at the start-up due to rotor inertia. Thus, in the power recovery pump turbine a fluid film thrust bearing would not be able to handle the axial thrust loads encountered during portions of the operational cycle for the power recovery pump device.

To handle the axial loads a thrust balancing technique is used by the power recovery pump device. A groove 67 is located in the turbine end cap 53. A passageway 69 extends through the turbine end cap 53. The groove 67 is in communication with the turbine impeller cavity 83. A passageway 73 extends through the pump end cap 51 as in communication with the pump inlet 33. A conduit 75 extends from the passageway 69 in the turbine end cap 53 to the passageway 73 of the pump end cap 51. The internal surface of the turbine end cap is machined to precisely the same contour as the side wall of the turbine impeller 59. When the feed pump is operating, the fluid pressure in the pump inlet 33 is somewhat higher than in the turbine impeller cavity 83. This pressure differential can cause the rotor shaft 61, the pump impeller 57 and the turbine impeller 59 to move in a direction towards the turbine end cap 53. When this occurs the outer axial clearance 85 and inner axial clearance 87 between the turbine impeller 59 and the turbine end cap 53 is reduced resulting in an effective sealing of the groove 67 from the turbine impeller cavity 83 and the turbine exhaust passageway 43. This sealing effect combined with the flow of the liquid through conduit 75 causes the fluid pressure in the groove 67 to build up and this prevents any further movement of the rotor shaft 61 towards the turbine end cap 53. If the rotor shaft 61 moves away from the turbine end cap 53, there is an increase in the outer axial clearance 85 and inner axial clearance 87, and this allows the water supply to the groove 67 to drain out quickly through the axial clearance into the turbine exhaust passageway 43. This drainage reduces the pressure in the groove 67 and reduces the force acting on the rotor shaft to move the rotor shaft away from the turbine end cap 53. Usually when the saltwater rapidly drains out of the groove 67 there is a tendency for the rotor shaft 61 to move back towards the turbine end cap 53. The orifice plate 79 helps to further reduce the pressure in the groove 67 during period of high drainage as the orifice plate restricts the quick change of flow conditions in the conduit 75. Thus, there can not be a drastic increase in the flow rate of saltwater through the conduit 75 into the groove 67.

This connection by the groove 67, the passageway 73 and conduit 75 between the turbine impeller cavity 83 and the pump inlet 33 insures that there is never contact between the turbine end cap 53 and the turbine impeller 59 even during transient conditions such as start-up of the power recovery pump device. Also, any wear that may occur due to such factors as corrosion or erosion simply results in the rotor shaft moving axially toward the turbine end cap 53 by a distance sufficient to compensate for the material that has been lost from the turbine end cap 53 or the turbine impeller 59 due to the effects of corrosion or erosion. Therefore, the thrust balancing features of the pwoer recovery pump device should last almost indefinitely and insure that the rotor shaft 61, the turbine impeller 59 and the pump impeller 57 are in the proper position. This thrust balancing technique also elimiantes the need for wear rings for the turbine impeller cavity 83. Normally wear rings are used to minimize the leakage between the high pressure in the turbine impeller cavity 83 and the relatively low pressure in the turbine exhaust passageway 43. The extremely small axial clearance 85 between the turbine impeller cavity 83 and the turbine exhaust passageway 43 provides an effective seal and does away with the requirement for wear rings.

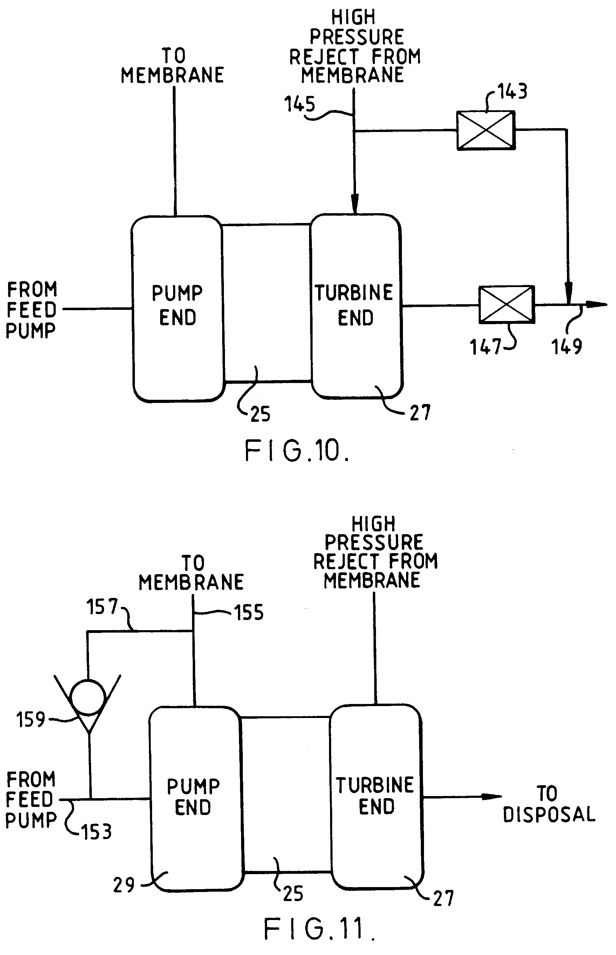

The power recovery pump device 25 is constructed to insure adequate lubrication and cooling of the sleeve bearing 63 (as shown in Fig.10). The pressure in the chamber 111 which is on the pump side of the sleeve bearing 63 is somewhat higher than the pressure in the annual space 113 which is on the turbine side of the sleeve bearing. This pressure differential results in the flow of liquid from the chamber 111, through the seal clearance 115 into the annular space 113. This flow of liquid helps to provide adequate fluid flim to lubricate the bearing and also insures that frictionally generated heat is carried away from the sleeve bearing 63. At the same time the small clearance 115 effectively minimizes excessive leakage between the chamber 111 and the annular space 113. Thus the arrangement shown in Fig.10 for the rotor shaft 61 and sleeve bearing 63 provides for bearing lubrication, bearing cooling and shaft sealing in a very simple manner.

In Fig. 5 there is shown the seal that provides a long-lasting and effective seal between the pump impeller discharge and the pump inlet. A wear ring 93 extends part way into the seal cavity 91 in the pump end cap 51. The seal cavity 91 is sealed by O-rings 95 that engage the wear ring 93. The wear ring 93 is free to move axially in the seal cavity 91. The pin 92 prevents rotation of the wearing ring 93 in the seal cavity 91. The seal cavity 91 is in communication with the pump inlet 33 through passageway 97. In operation the pump impeller cavity 88 becomes filled with fluid that is at a somewhat higher pressure than the fluid in the pump inlet 33. The average pressure acting on the seal face 103 is about halfway between the pressure in the pump impeller cavity 88 and the pump inlet 33. The net force acting to push the seal face 103 away from the side wall of the pump impeller 57 equals the average pressure times the area of the seal face 103. The force acting to push the seal face 103 towards the side wall of the pump impeller 57 equals the sum of the area of the face 101 in the seal cavity 91 times the suction pressure of the pump and the area of the step face 105 times the pressure in the pump impeller cavity 88. With the proper ratio between the step face 105 and the face 101, the axial seal clearance between the seal face 103 and the side wall of the impeller 57 can be maintained as less than .125 mm (0.005 inches). This close clearance reduces the leakage from the impeller cavity 88 to the pump inlet 33 to a negligible value.

In reverse osmosis systems, the flowrate into and out of the membrane chamber can change due to the changes in the demand for fresh water. The power recovery pump device rotor speed automatically increases or decreases to meet minor changes in the flow rate. Fig. 10 illustrates the use of two valves to handle extremely large changes in the flow rate into and out of the membrane chamber. The first valve 143 is attached to the brine discharge line 145 between the power recovery pump device 25 and the membrane chamber (not shown). If the pressure in the membrane chamber becomes too high due to increased flow of the concentrated saltwater brine from the membrane chamber, the first valve 143 will open. A second value 147 is positioned on the disposal line 149 that extemds from the turbine end 27 of the power recovery pump device 25. The second valve 147 restricts turbine outlet flow if the pressure in the membrane chamber becomes too low due to reduced flow of the concentrated saltwater brine that is discharged from the membrane chamber. The first valve 142 and second valve 147 may be manually or automatically operated.

In some applications it is possible that the concentrated saltwater brine flow rate from the membrane chamber is insufficient to operate the power recovery pump device in a normal manner. In such cases the turbine end of the power recovery pump device does not rotate rapidly enough to provide force to the pump end of the power recovery pump device to assist in pumping the salt water to the member chamber. In this situation the power recovery pump device can actually reduce feed pressure through the membrane chamber and thereby increase the amount of work required by the feed pump. In this situation the power recovery pump device could be a liability to the system rather than act to reduce energy costs. Fig.11 shows a configuration for the power recovery pump device that can act to reduce the pressure of the saltwater that is fed from the feed pump to the membrane chamber. In this configuration a pipe 153 directs the saltwater from the feed pump to the pump end 29 of the power recovery pump device 25. Feed pipe 155 directs the saltwater from the pump end 29 of the power recovery pump device 25 to the membrane chamber (not shown). A passageway 157 extends between the pipe 153 and the feed pipe 155 to provide an alternative path for the flow of saltwater that bypasses the pwoer recovery pump device. A check valve 159 is positioned in the passageway 157. During normal operation of the power recovery pump device, the pressure is higher in the feed pipe 155 that discharges from the pump end 29 than in the pipe 153 that supplies saltwater to the pump inlet. In this situation the higher pressure in the feed line pipe 155 will act upon the check valve 159 and keep the check valve clsoed so that saltwater will not flow from the pipe 153 through the passageway 157. However, in those instances where the pressure in the pipe 153 is higher than the pressure in the feed pipe 155 due to insufficient flow of concentrated saltwater brine through the turbine end 127 of the power recovery pump device 25, the check valve 159 will open due to the higher pressure in pipe 153. This provides an alternative flow path for the saltwater through the passageway 157 to avoid the power recovery pump device. The passageway 157 and check valve 159 provide a system whereby any undesirable pressure loss in the stream of saltwater that is fed to the membrane chamber can be significantly reduced or eliminated.

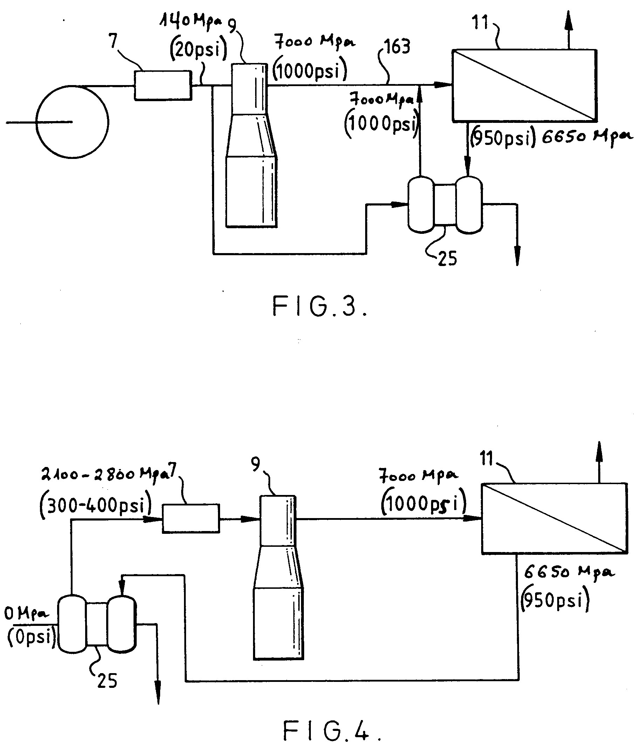

Fig. 3 shows an alternative embodiment where a power recovery pump device 25 is pumping in parallel with the feed pump 9. The saltwater leaving the filter unit 7 is split into two streams. One stream passes through the feed pump 9 which raises water pressure to the level required by the membrane chamber 11. The other stream of saltwater passes through the power recovery turbine device 25 which also raises the water pressure to the level required by the membrane chamber 11. The streams of saltwater discharge from the feed pump 9 and from the power recovery pump device 25 are combined into a single stream just prior to entering the membrane chamber 11. The high pressure concentrated saltwater brine that is discharged from the membrane chamber 11 is directed into the power recovery pump device 25 as discussed previously. Using the feed pump 9 and power recovery pump device 25 to pump in parallel allows the use of a lower capacity feed pump as the feed pump only handles a portion of the total feed flow that is supplied to the membrane chamber 11. This reduced flow rate also reduces the power required by the feed pump 9. Another advantage is that if the power recovery pump device should fail or be removed from the reverse osmosis system, the feed pump could still provide a significant quantity of saltwater into the membrane chamber 11 at an adequate pressure to produce fresh water.
another alternative embodiment that can be used in reverse osmosis system is shown in Fig. 4. In this embodiment the power recovery pump device 25 is positioned ahead of the feed pump 9 and filter 7. In this configuration the power recover pump device eliminates the booster pump shown in Fig. 2. In this configuration the power recovery pump device acts as previously described to increase the pressure of the saltwater that is to be purified. However, in this embodiment the pressure is increased before the saltwater passes through the filter and is fed into the feed pump 9. However, the same general benefits are derived as the feed pump 9 does not have to provide as much of an incrase in the pressure of the saltwater and this greatly reduces the power requirements for the feed pump and can extend the life of the feed pump. At the same time, energy is recovered from the high pressure concentrated saltwater brine that is discharged from the membrane chambe 11. This energy is effectively recaptured and utilized by the power recovery pump device 25 to produce the overall energy requirements of the reverse osmosis system.

## Claims

1. An energy recovery pump device (25) for use in an industrial process (11) where a fluid is pumped at a high pressure into the process and at least a portion of the fluid is discharged from the process at a high pressure, the device comprising:
a central body portion (49) that defines a turbine impeller cavity (83) and a pump impeller cavity (88);
a turbine inlet nozzle (41) extending through said central body portion (49); said turbine inlet nozzle (41) opening into the outer periphery of said turbine impeller cavity (83), and a turbine exhaust passageway (43) leading away from adjacent the center of said turbine impeller cavity;
a turbine positioned in said turbine impeller cavity (83), said turbine comprising a turbine impeller (59) mounted on a shaft (61);
a pump positioned in said pump impeller cavity (88) to receive said fluid to be pumped at high pressure into said process (11) said pump comprising a pump impeller (57) also mounted on shaft (61) whereby rotation of said turbine causes said pump impeller (57) to rotate whereby said pump assists in supplying said received fluid under high pressure to said process, characterised in that a cap (53) defines an end wall of said turbine impeller cavity (83) at a clearance (81) with said turbine impeller (59) and in that an annular groove (67) is formed in the said cap (53), said groove (67) being in communication with ducting (69, 75, 73) which ducting itself communicates with a region in the pump impeller cavity (88) of high fluid pressure whereby fluid can flow through said ducting (69, 75, 73) and annular groove (67) to balance the forces exerted on said pump impeller (57) and said turbine impeller (59).

2. An energy recovery pump device as claimed in claim 1 characterised in that the ducting (69,75,73), placing the annular groove (67) in communication with a high pressure area in the pump impeller cavity (88), itself comprises a passageway (69) in the turbine impeller cavity end cap (53) and valved communication ducting (75, 77) leading to a passageway (73) in a like end cap (51) for the pump impeller cavity (88).

3. An energy recovery pump device as claimed in claim 2 characterised in that a plate (79) with a plurality of orifices therethrough is located within the said ducting (75) to prevent rapid changes in the rate of fluid flow therein.

4. An energy recovery pump device as claimed in claims 1, 2 or 3 characterised in that the cross-section of the annular groove (67) is from 1.5 to 2.5 times the cross-sectional area of the shaft (61).

5. An energy recovery pump device as claimed in any one preceding claim comprising a pump cavity end cap (51) characterised in that a generally annular seal holding cavity (91) in the end cap (51) slidably holds a projecting wear ring (93) for axial movement whereby an end sealing face (103) may be held a small clearance with pump impeller (57).

6. An energy recovery pump device as claimed in claim 5 characterised in that a passage (97) extends from an inlet (33) of the pump (57/61) to the seal cavity (91) within the wear ring (93), whereby fluid pressure in the pump inlet passage (33) balances the forces exerted on the wear ring (93).

7. An energy recovery pump device as claimed in claim 5 or 6 characterised in that a cross-section of that portion of the wear ring (93) outside of the cavity (91) has a greater area than that of the radial cross-section of the portion of the wear ring (93) within the cavity (91).

8. An energy recovery pump device as claimed in claim 7 characterised in that the wear ring (93) presents a shoulder between that portion within the holding cavity (91) and the portion outside of the cavity (91), said shoulder defining a step face (105) substantially parallel to the sealing face (103).

9. An energy recovery pump device as claimed in claim 8 characterised in that an end face (101) on the portion of the wear ring (93) within the holding cavity (91) has a total area of about 0.4 that of the seal face (103) and in that the step face (105) has a total area of about 0.6 times that of the sealing face (103), whereby the said end face (101) and step face (105) jointly balance the forces on the sealing face (103).

10. An energy-recovery pump device as claimed in any one preceding claim, characterised in that a sleeve bearing (63) surrounds the shaft 61 at a location between the pump impeller cavity (88) and turbine impeller cavity (83), the clearance (115) between the shaft (61) and the bearing (63) communicating on the one side with a space (111) communicating with the pump impeller cavity (88) and on the other side with a space (113) similarly communicating with the turbine impeller cavity (83), whereby small amounts of fluid flows from the relatively higher pressure pump impeller cavity (88) to the relatively lower pressure turbine impeller cavity (83), through the clearance (115) in order to provide a fluid lubricating film and to carry away any frictionally generated heat.

## Patentansprüche

1. Energierückgewinnungspumpvorrichtung (25) für einen Einsatz bei einem industriellen Prozeß (11), bei dem ein fließendes Medium mit hohem Druck in den Prozeß gepumpt und zumindestens ein Teil des fließenden Mediums aus dem Prozeß bei hohem Druck entleert wird, wobei die Vorrichtung aufweist:
einen mittleren Gehäuseabschnitt (49), der einen Hohlraum (83) des Turbinenlaufrades und einen Pumpenradhohlraum (88) abgrenzt;
eine Turbineneintrittsdüse (41), die sich durch den mittleren Gehäuseabschnitt (49) erstreckt, wobei sich die Turbineneintrittsdüse (41) in den Außenumfang des Hohlraumes (83) des Turbinenlaufrades öffnet, und einen Turbinenausströmkanal (43), der von der Mitte des Hohlraumes des Turbinenlaufrades wegführt;
eine Turbine, die im Hohlraum (83) des Turbinenlaufrades angeordnet ist, wobei die Turbine ein Turbinenlaufrad (59) aufweist, das auf einer Welle (61) montiert ist;
eine Pumpe, die im Pumpenradhohlraum (88) angeordnet ist, um das fließende Medium aufzunehmen, das mit hohem Druck in den Prozeß (11) gepumpt wird, wobei die Pumpe ein Pumpenrad (57), das ebenfalls auf der Welle (61) montiert ist, aufweist, wodurch die Drehung der Turbine bewirkt, daß sich das Pumpenrad (57) dreht, und wodurch die Pumpe die Zuführung des aufgenommenen fließenden Mediums unter hohem Druck zum Prozeß unterstützt, dadurch gekennzeichnet, daß ein Deckel (53) eine Stirnseitenwand des Hohlraumes (83) des Turbinenlaufrades mit einem Zwischenraum (81) zum Turbinenlaufrad (59) abgrenzt, und daß im Deckel (53) eine Ringnut (67) gebildet wird, wobei die Nut (67) mit dem Kanalsystem (69,75,73) in Verbindung steht, und wobei das Kanalsystem selbst mit einem Hochdruckbereich des fließenden Mediums im Pumpenradhohlraum (88) in Verbindung steht, wodurch das fließende Medium durch das Kanalsystem (69,75,73) und die Ringnut (67) strömen kann, um die Kräfte auszugleichen, die auf das Pumpenrad (57) und das Turbinenlaufrad (59) ausgeübt werden.

2. Energierückgewinnungspumpvorrichtung nach Anspruch 1, dadurch gekennzeichnet, daß das Kanalsystem (69,75,73), das die Ringnut (67) mit einem Hochdruckbereich im Pumpenradhohlraum (88) in Verbindung bringt, selbst einen Durchgang (69) im Stirnseitendeckel (53) des Hohlraumes des Turbinenlaufrades und ein mit einem Ventil versehenes Verbindungskanalsystem (75,77), das zu einem Durchgang (73) in einem gleichen Stirnseitendeckel (51) für den Pumpenradhohlraum (88) führt, aufweist.

3. Energierückgewinnungspumpvorrichtung nach Anspruch 2, dadurch gekennzeichnet, daß eine Platte (79) mit einer Vielzahl von kleinen Öffnungen darin innerhalb des Kanalsystems (75) angeordnet ist, um schnelle Veränderungen der Strömungsgeschwindigkeit des darin befindlichen fließenden Mediums zu verhindern.

4. Energierückgewinnungspumpvorrichtung nach Anspruch 1, 2 oder 3, dadurch gekennzeichnet, daß der Querschnitt der Ringnut (67) zwischen dem 1,5- und 2,5-fachen der Querschnittsfläche der Welle (61) liegt.

5. Energierückgewinnungspumpvorrichtung nach einem der vorhergehenden Ansprüche, die einen Stirnseitendeckel (51) des Pumpenhohlraumes aufweist, dadurch gekennzeichnet, daß ein im allgemeinen ringförmiger Dichtungshohlraum (91) im Stirnseitendeckel (51) verschiebbar einen vorstehenden Verschleißring (93) für die axiale Bewegung aufnimmt, wodurch bei der Stirnseitendichtfläche (103) ein geringer Zwischenraum zum Pumpenrad (57) eingehalten werden kann.

6. Energierückgewinnungspumpvorrichtung nach Anspruch 5, dadurch gekennzeichnet, daß sich ein Durchgang (97) vom Eintritt (33) der Pumpe (57/61) zum Dichtungshohlraum (91) innerhalb des Verschleißringes (93) erstreckt, wodurch der Druck des fließenden Mediums im Pumpeneintrittskanal (33) die Kräfte ausgleicht, die auf den Verschleißring (93) ausgeübt werden.

7. Energierückgewinnungspumpvorrichtung nach Anspruch 5 oder 6, dadurch gekennzeichnet, daß ein Querschnitt jenes Abschnitts des Verschleißringes (93) außerhalb des Hohlraumes (91) eine größere Fläche zeigt als die des radialen Querschnitts des Abschnitts des Verschleißringes (93) innerhalb des Hohlraumes (91).

8. Energierückgewinnungspumpvorrichtung nach Anspruch 7, dadurch gekennzeichnet, daß der Verschleißring (93) einen Absatz zwischen jenem Abschnitt innerhalb des Hohlraumes (91) und dem Abschnitt außerhalb des Hohlraumes (91) aufweist, wobei der Absatz eine Stufenfläche (105) abgrenzt, die im wesentlichen parallel zur Dichtfläche (103) verläuft.

9. Energierückgewinnungspumpvorrichtung nach Anspruch 8, dadurch gekennzeichnet, daß eine Stirnseitenfläche (101) am Abschnitt des Verschleißringes (93) innerhalb des Hohlraumes (91) eine Gesamtfläche von etwa dem 0,4-fachen der der Dichtfläche (103) aufweist, und dadurch, daß die Stufenfläche (105) eine Gesamtfläche von etwa dem 0,6-fachen der der Dichtfläche (103) aufweist, wodurch die Stirnseitenfläche (101) und die Stufenfläche (105) gemeinsam die auf die Dichtfläche (103) wirkenden Kräfte ausgleichen.

10. Energierückgewinnungspumpvorrichtung nach einem der vorhergehenden Ansprüche, dadurch gekennzeichnet, daß ein Gleitlager (63) die Welle (61) an einer Stelle zwischen Pumpenradhohlraum (88) und Hohlraum (83) des Turbinenlaufrades umgibt, wobei ein Zwischenraum (115) zwischen der Welle (61) und dem Lager (63) zu verzeichnen ist, der auf der einen Seite mit einem Raum (111), der mit dem Pumpenradhohlraum (88) verbunden ist, und auf der anderen Seite mit einem Raum (113), der in der gleichen Weise mit dem Hohlraum (83) des Turbinenlaufrades verbunden ist, in Verbindung steht, wodurch eine kleine Menge des fließenden Mediums vom Pumpenradhohlraum (88) mit dem relativ höheren Druck zum Hohlraum (83) des Turbinenlaufrades mit dem relativ niedrigeren Druck durch den Zwischenraum (115) strömt, um einen Schmierfilm des fließenden Mediums zu liefern, und um jegliche durch Reibung erzeugte Wärme abzuführen.

## Revendications

1. Un dispositif de pompe à récupération d'énergie (25), destiné à être utilisé dans un processus industriel (11) où un fluide est pompé sous haute pression dans le processus, au moins une partie du fluide étant déchargée sous haute pression du processus, le dispositif comprenant:
une partie de corps centrale (49), définissant une cavité de roue à ailettes de la turbine (83) et une cavité de roue à ailettes de la pompe (88);
une tuyère d'entrée de turbine (41) s'étendant à travers ladite partie de corps centrale (49); ladite tuyère d'entrée de turbine (41) s'ouvrant dans la périphérie extérieure de ladite cavité de roue à ailettes de la turbine (83) et un passage de sortie de la turbine (43), s'étendant en s'éloignant d'un point situé à proximité du centre de ladite cavité de roue à ailettes de la turbine;
une turbine agencée dans ladite cavité de roue à ailettes de la turbine (83), ladite turbine comprenant une roue à ailettes de turbine (59) montée sur un arbre (61);
un pompe agencée dans ladite cavité de la roue à ailettes de la pompe (88) pour recevoir ledit fluide devant être pompé sous pression élevée dans ledit processus (11), ladite pompe comprenant une roue à ailettes de pompe (7), montée également sur l'arbre (61), la rotation de ladite turbine entraînant ainsi la mise en rotation de ladite roue à ailettes de la pompe (57), ladite pompe soutenant par suite l'amenée du dit fluide reçu sous haute pression vers ledit processus, caractérisé en ce qu'une couverture (53) définit une paroi d'extrémité de ladite cavité de la roue à ailettes de la turbine (83), un espacement (81) étant prévu par rapport à ladite roue à ailettes de la turbine (59) et en ce qu'une rainure annulaire (67) est formée dans ladite couverture (53), ladite rainure (67) étant en communication avec une conduite (69, 75, 73), cette conduite étant en communication avec une région dans la cavité de la roue à ailettes de la pompe (88), à pression de fluide élevée, le fluide pouvant ainsi traverser ladite conduite (69, 75, 73) et la rainure annulaire (67) pour équilibrer les forces exercées sur ladite roue à ailettes de la pompe (57) et ladite roue à ailettes de la turbine (59).

2. Un dispositif de pompe à récupération d'énergie selon la revendication 1, caractérisé en ce que la conduite (69, 75, 73) établissant une communication entre la rainure annulaire (67) et une zone à pression élevée dans la cavité de la roue à ailettes de la pompe (88) comprend elle-même un passage (69) dans la couverture d'extrémité de la cavité de la roue a ailettes de la turbine (53) et une conduite de communication à soupape (75, 77) menant à un passage (73) dans une couverture d'extrémité semblable (51) de la cavité de la roue à ailettes de la pompe (88).

3. Un dispositif de pompe à récupération d'énergie selon la revendication 2, caractérisé en ce qu'une plaque (79), comportant plusieurs orifices de passage, est agencée à l'intérieur de ladite conduite (75) pour empêcher des changements rapides de la vitesse d'écoulement du fluide dans celle-ci.

4. Un dispositif de pompe à récupération d'énergie selon les revendications 1, 2 ou 3, caractérisé en ce que la section de la rainure annulaire (67) représente 1,5 à 2,5 fois la superficie de la section de l'arbre (61).

5. Un dispositif de pompe à récupération d'énergie selon l'une quelconque des revendications précédentes, comprenant une couverture d'extrémité de la cavité de la pompe (51), caractérisé en ce qu'une cavité de joint généralement annulaire (91) dans la couverture d'extrémité (51) maintient par glissement un anneau d'usure en saillie (93), en vue d'un mouvement axial, une face de joint d'extrémité (103) pouvant ainsi être légèrement espacée de la roue à ailettes de la pompe (57).

6. Un dispositif de pompe à récupération d'énergie selon la revendication 5, caractérisé en ce qu'un passage (97) s'étend d'un orifice d'entrée (33) de la pompe (57/61) vers le cavité de joint (91) à l'intérieur de l'anneau d'usure (93), la pression de fluide dans le passage d'entrée de la pompe (33) équilibrant ainsi les forces exercées sur l'anneau d'usure (93).

7. Un dispositif de pompe à récupération d'énergie selon les revendications 5 ou 6, caractérisé en ce qu'une section de la partie de l'anneau d'usure (93) située en-dehors de la cavité (91) a une superficie plus grande que celle de la section radiale de la partie de l'anneau d'usure (93) située à l'intérieur de la cavité (91).

8. Un dispositif de pompe à récupération d'énergie selon la revendication 7, caractérisé en ce que l'anneau d'usure (93) présente un épaulement entre la partie située à l'intérieur de la cavité de maintien (91) et la partie située à l'extérieur de la cavité (91), ledit épaulement définissant une face étagée (105), pratiquement parallèle à la face de joint (103).

9. Un dispositif de pompe à récupération d'énergie selon la revendication 8, caractérisé en ce qu'une face d'extrémité (101) sur la partie de l'anneau d'usure (93), située à l'intérieur de la cavité de maintien (91), a une superficie totale représentant environ 0,4 fois celle de la face de joint (103) et en ce que la face étagée (105) a une superficie totale représentant environ 0,6 fois celle de la face de joint (103), ladite face d'extrémité (101) et ladite face étagée (105) équilibrant ainsi conjointement les forces sur la face de joint (103).

10. Un dispositif de pompe à récupération d'énergie selon l'une quelconque des revendications précédentes, caractérisé en ce qu'un palier à coussinet-douille (63) entoure l'arbre (61) en un emplacement situé entre la cavité de la roue à ailettes de la pompe (88) et la cavité de la roue à ailettes de la turbine (83), l'espacement (115) entre l'arbre (61) et le palier (63) communicant sur un côté avec un espace (111) en communication avec la cavité de la roue à ailettes de la pompe (88) et de l'autre côté avec un espace (113) en communication similaire avec la cavité de la roue à ailettes de la turbine (83), de faibles quantités de fluide s'écoulant ainsi de la cavité de la roue à ailettes de la pompe (88), à pression relativement élevée, vers la cavité de la roue à ailettes de la turbine (83), à pression relativement basse, à travers l'espacement (115), pour produire un film lubrifiant de fluide et éliminer toute chaleur produite par friction.
